(19) Europäisches Patentamt

European Patent Office

Office européen des brevets

(11) EP 0 867 803 B1

(12) FASCICULE DE BREVET EUROPEEN

(45) Date de publication et mention
de la délivrance du brevet:
**03.09.2003 Bulletin 2003/36**

(51) Int Cl.⁷: **G06F 9/32**, G06F 9/38,
G06F 9/45

(21) Numéro de dépôt: **98400680.9**

(22) Date de dépôt: **24.03.1998**

(54) **Procédé et dispositif de compactage de boucles de microprogrammes**

Verfahren und Gerät zur Kompaktierung von Mikrocodeschleifen

Method and apparatus for compacting microprogram loops

(84) Etats contractants désignés:
**DE ES FR GB IT**

(30) Priorité: **28.03.1997 FR 9703839**

(43) Date de publication de la demande:
**30.09.1998 Bulletin 1998/40**

(73) Titulaire: **Thales**
**75008 Paris (FR)**

(72) Inventeurs:
• **Lenormand, Eric**
**94117 Arcueil Cedex (FR)**

• **Bonnot, Philippe**
**94117 Arcueil Cedex (FR)**

(56) Documents cités:
**EP-A- 0 543 366**

• **GRAY S M ET AL: "STATIC INSTRUCTION**
**SCHEDULING FOR THE HARP**
**MULTIPLE-INSTRUCTION-ISSUE**
**ARCHITECTURE" MICROPROCESSORS AND**
**MICROSYSTEMS, vol. 17, no. 7, 1 septembre**
**1993, pages 415-424, XP000397914**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne un procédé et un dispositif de compactage de boucles de microprogrammes à microinstructions longues.

Elle s'applique notamment à des architectures microprogrammées réalisées sous la forme de microcircuits ou puces de microcircuits connues sous le nom d'architecture VLIW où VLIW est l'abréviation anglo-saxonne de « Very Long Instruction Word ».

Dans ces architectures, le format des microinstructions qui se renouvellent à chaque cycle d'une horloge, se décompose explicitement en champs associés à des ressources spécifiques telles que des unités arithmétiques-logiques, des unités de calcul d'adresses etc. dédiées chacune à l'exécution de classes particulières d'opérations élémentaires.

Les microinstructions longues présentent l'intérêt qu'elles simplifient les commandes des ressources puisque le parallélisme qui caractérise l'exécution des différentes opérations élémentaires par les différentes ressources est déterminé lors de la programmation ou lors de la compilation des différentes microinstructions et non pas en temps réel lors de leur exécution comme c'est le cas par exemple pour les architectures connues sous l'abréviation anglo-saxonne RISC de « Reduced Instruction Set Computer ».En revanche, comme dans le cas général du déroulement d'un microprogramme, toutes les ressources ne peuvent être sollicitées en même temps à chaque cycle, certains champs doivent être laissés vides de toute information ce qui conduit à augmenter le nombre de microinstructions nécessaire. Il en résulte un inconvénient majeur des architectures VLIW qui est d'aboutir à des microprogrammes occupant un espace mémoire important du fait qu'ils travaillent fréquemment sur des champs vides qu'il faut soit importer de l'extérieur soit stocker dans la mémoire cache de la puce de microcircuit. En fait les architectures VLIW sont surtout mises en oeuvre dans des domaines très spécialisés bénéficiant de ressources adaptées. C'est le cas par exemple des circuits de traitement du signal connus sous l'abréviation DSP du vocable anglo-saxon « Digital Signal Processor » qui comportent des opérateurs arithmétiques composés d'additionneurs, de circuits multiplieurs-accumulateurs, de circuits décaleurs, et d'unités pour le calcul des adresses des opérandes.

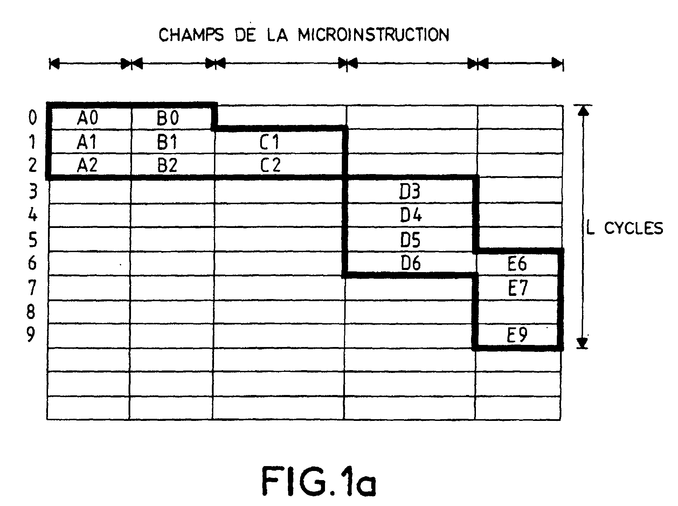

Pour ces domaines d'applications, la majorité de la puissance de calcul est consacrée à des répétitions de séquences particulières d'opérations ou de suites d'itérations, chaque itération étant composée des opérations nécessaires à l'exécution d'une seule de ces séquences. Un exemple d'itération composée d'une suite de L microinstructions est montré à la figure 1a. Compte tenu de l'ordre dans lequel les opérations d'une itération doivent être exécutées, et parfois de la latence de certaines opérations élémentaires (multiplieur pipeliné par exemple), une part importante des champs des microinstructions est inactive. Pour améliorer le rendement du circuit dans le cas où plusieurs itérations sont à exécuter, le programmeur, ou l'outil de programmation doivent alors organiser le microprogramme d'une itération de telle manière qu'il puisse se superposer à lui-même en lançant une nouvelle itération après chaque exécution d'un nombre déterminé de P microinstructions où P est inférieur à L. Ceci est obtenu classiquement en adoptant les deux règles suivantes, à savoir :

1. qu'une ressource (et donc un champ) utilisée lors d'une microinstruction x ne doit pas être invoquée aux microinstructions x + k*P, k étant un entier non nul quelconque.

2. et qu'un registre chargé lors d'une microinstruction x ne doit pas être utilisé comme entrée d'une opération au-delà de la microinstruction x + P-1, au risque d'être écrasé par l'instruction de chargement de l'itération suivante, en x + P.

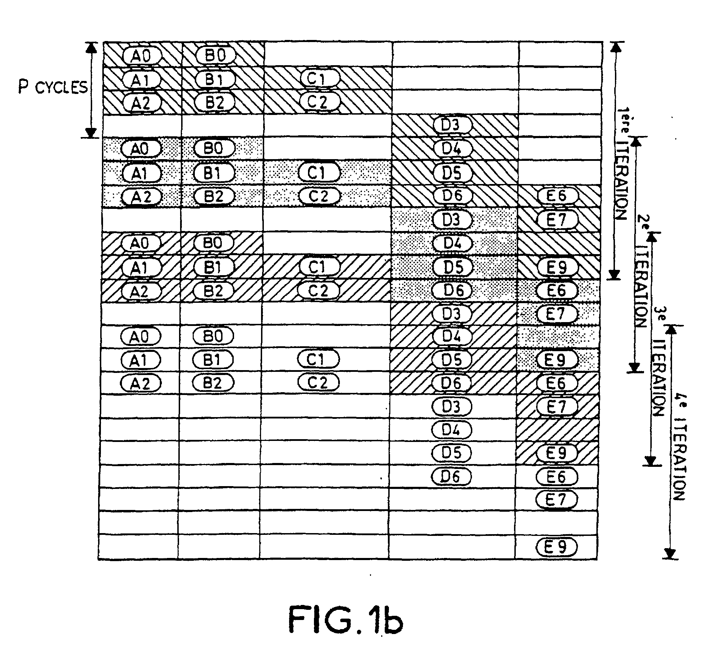

La figure 1b illustre une mise en oeuvre de ce principe à l'aide d'un exemple montrant l'exécution d'un microprogramme composé d'itérations se renouvelant tous les quatre cycles et dont l'exécution s'étale sur dix cycles. Le rendement maximal est atteint lorsqu'au moins une des ressources du circuit (donc un des champs) est utilisée à chaque cycle. Dans ce cas la latence relative $L_r$ de l'itération est déterminée par le plus petit entier strictement supérieur au quotient (L-1)/P. Dans l'exemple des figures, la latence relative est de 3. La latence relative indique en particulier le nombre maximal d'itérations en cours de traitement lors d'un cycle d'horloge donné.

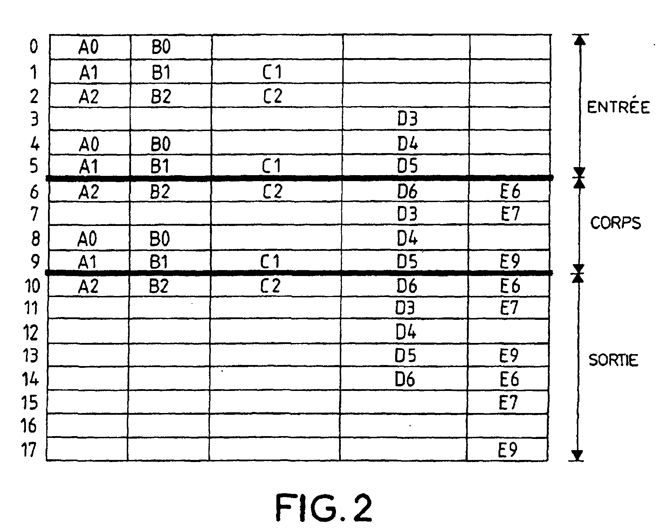

En pratique, le microprogramme est écrit dans une mémoire, à raison d'une microinstruction complète par adresse. Un dispositif appelé microséquenceur fournit à chaque cycle d'horloge l'adresse de la microinstruction qui doit être exécutée lors du cycle suivant. Lorsque le nombre N d'itérations demandé est assez grand, le microprogramme est écrit sous forme d'une boucle compactée, comme indiqué à la figure 2. L'opération de compactage, s'effectue soit manuellement, soit automatiquement en faisant appel aux techniques connues de compilation telles que celle décrite dans l'article de M. Lam intitulé « Software Pipelining : An effective scheduling technique for VLIW machines » Proc. of the ACM SIGPLAN Conf. on Programming Languages Design and Implementation, June 88. Généralement, le microprogramme compacté d'une boucle se décompose en trois parties :

- une partie appelée ici entrée de boucle, qui est composée d'une séquence de microinstructions VLIW qui ne s'exécute qu'une fois.
- une partie appelée corps qui s'exécute (N-Lr + 1) fois.
- une partie appelée sortie de boucle, qui ne s'exécute qu'une fois.

Cette décomposition en trois parties est nécessaire par le fait que lors des premières et dernières itérations, certains champs de microinstruction ne sont pas encore ou ne sont plus actifs. Avec cette méthode, la longueur du microprogramme de la boucle est de l'ordre de $L + (L_r - 1) P$ microinstructions, soit 18 dans l'exemple.

Le but de l'invention est de réduire à P cette longueur, en augmentant légèrement la largeur des microinstructions.

A cet effet l'invention a pour objet un procédé de compactage et d'exécution par itérations successives de boucles de microprogrammes comportant un nombre déterminé L de microinstructions longues composées de plusieurs champs répétables selon un nombre déterminé N d'itérations, caractérisé en ce qu'il consiste :

- à partager le nombre L de microinstructions suivant un nombre $L_r$ de tranches de P microinstructions, où $L_r$ est le plus petit entier strictement supérieur au quotient $(L-1)/P$,
- à adjoindre à chaque champ de microinstructions un champ drapeau identifiant une tranche dans laquelle chaque microinstruction se trouve,
- à superposer dans une mémoire de programme $L_r$ tranches obtenues pour obtenir un microprogramme compacté de P microinstructions seulement,
- à identifier toutes les P microinstructions les tranches actives successives,

et à exécuter pendant les N itérations les champs des microinstructions dont le numéro de drapeau correspond à une tranche active.

Elle a également pour objet un dispositif pour la mise en oeuvre de ce procédé.

L'invention a principalement pour avantage qu'elle permet une diminution de l'espace mémoire nécessaire au déroulement de microprogrammes comportant des microinstructions longues.

D'autres caractéristiques et avantages de l'invention apparaîtront à l'aide de la description qui suit faite en regard des dessins annexés qui représentent :

Les figures 1a, 1b et 2 des schémas d'organisation d'espace mémoire permettant l'exécution de microinstructions selon l'art antérieur.

Les figures 3a et 3b un exemple de compactage d'un microprogramme selon l'invention.

La figure 4 un premier mode de réalisation d'un dispositif pour la mise en oeuvre du procédé selon l'invention.

La figure 5 un exemple de contrainte rencontrée dans l'occupation des registres de calcul.

La figure 6 un deuxième mode de réalisation d'un dispositif pour la mise en oeuvre du procédé selon l'invention.

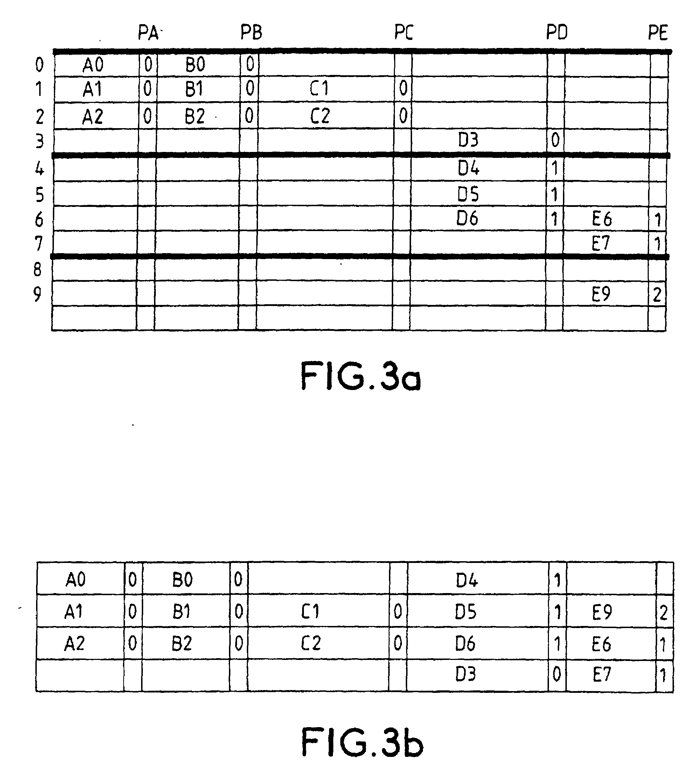

Dans la mise en oeuvre du procédé selon l'invention chaque microprogramme d'une itération à compacter se compose d'un nombre déterminé L de microinstructions, répétable tous les cycles comme dans l'exemple décrit précédemment. Cependant, à chaque champ $A_i$, $B_i$... d'une microinstruction i est ajouté de la façon représentée à la figure 3a, un champ drapeau PA, PB... composé d'un couple de bits représentatif du numéro de la tranche dans laquelle chaque microinstruction se trouve. La première tranche est notée 0 et les tranches suivantes sont notées dans l'ordre naturel des nombres entiers. Sur la figure 3a trois tranches sont représentées. La première tranche de numéro 0 comporte une première microinstruction composée des champs $(A_0, B_0)$, une deuxième microinstruction composée des champs $(A_1, B_1, C_1)$, une troisième microinstruction composée des champs $(A_2, B_2, C_2)$ et une quatrième microinstruction composée d'un seul champ D3. Les champs drapeaux associés PA, PB, PC et PD ont tous pour valeur décimale la valeur 0. La deuxième tranche comporte quatre microinstructions composée respectivement des champs $D_4$, $D_5$, $(D_6, E_6)$ et $E_7$ et les drapeaux associés PD et PE ont la valeur décimale 1. Enfin la troisième tranche comporte seulement une microinstruction composée seulement d'un champ E9 associé à un drapeau de valeur 2. Le compactage de tous les champs et des drapeaux associés est réalisé de la façon montrée à la figure 3b, en superposant les trois tranches en une seule.

Le procédé permet d'exécuter pour chacune des itérations d'abord les microinstructions contenues dans les champs dont les drapeaux associés ont pour valeur 0, puis les champs dont les drapeaux ont pour valeur 1 et ainsi de suite jusqu'aux champs associés ou drapeau de valeur $L_r - 1$. Les drapeaux permettent également, comme il sera vu plus loin, d'associer à l'opération du champ qu'elles accompagnent un contexte lié à l'itération.

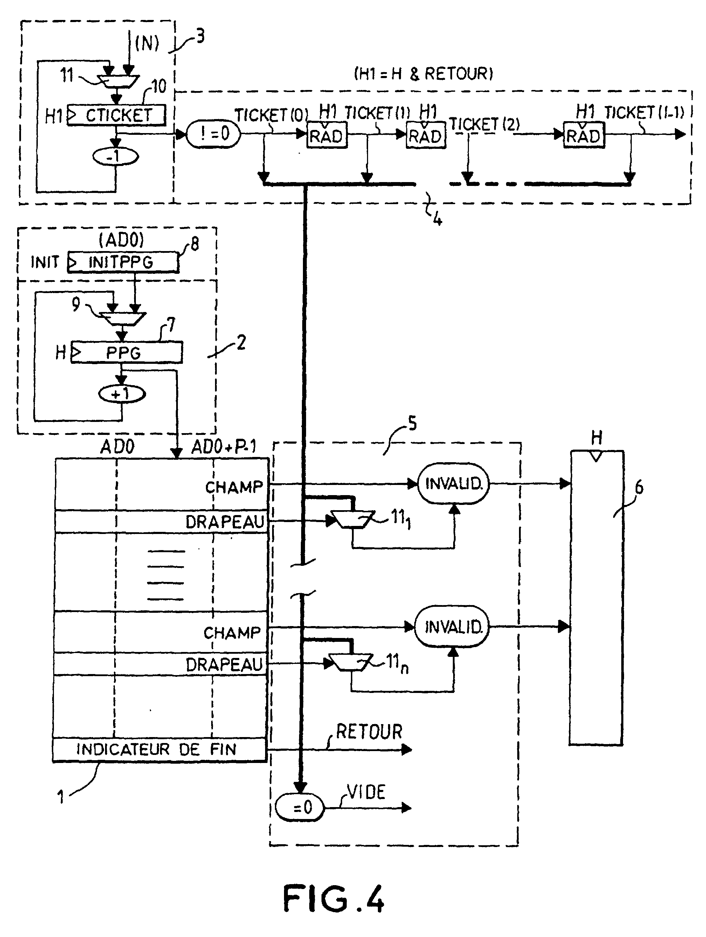

Le dispositif pour la mise en oeuvre du procédé selon l'invention qui est représenté à la figure 4 permet d'une part, d'identifier toutes les P microinstructions les tranches successives et d'autre part d'exécuter pendant un nombre déterminé N d'itérations les champs dont le drapeau correspond à une tranche active. Ce dispositif comprend une mémoire de programme 1, un dispositif pointeur de programme 2, un compteur 3 d'itération encore appelé compteur de ticket, un registre à décalage 4, un dispositif de lecture 5 et un registre de microinstruction 6, les éléments 2, 3 et 4 étant représentés à l'intérieur de lignes formées en pointillés. La mémoire de programme 1 enregistre les microprogrammes à exécuter dont les microinstructions compactées selon le procédé de l'invention sont adressées par le dispositif pointeur de programme 2. Celui-ci peut être réalisé de façon connue à l'aide d'un registre accumulateur 7 chargé à partir d'une adresse de base contenue dans un registre d'adresse 8 et incrémenté d'une unité à chaque passage du microprogramme à l'exécution des champs de microinstruction de l'adresse suivante au travers d'un circuit multiplexeur 9.

Le compteur de tickets 3 comporte un registre accumulateur 10 chargé initialement par le nombre d'itération N à exécuter et décrémenté d'une unité à chaque nouvelle itération au travers d'un circuit multiplexeur 11. A chaque nouvelle itération le contenu du registre accumulateur 10 est appliqué sur l'entrée du registre à décalage 4 formé de $L_r$ - 1 bascules notées RAD (1) à RAD ($L_r$ - 1) reliées en série.

Le dispositif de lecture 5 est interposé entre la sortie de donnée de la mémoire 1 et le registre de microinstruction 6. Il comporte un nombre déterminé $11_1$ à $11_n$ de portes de validation des champs lus dans la mémoire 1. Le fonctionnement du dispositif est décrit ci-après dans le cadre d'une mise en oeuvre d'une séquence de microinstructions et comportant un nombre N d'itérations d'une séquence dont le microprogramme, compacté conformément à l'invention, occupe dans la mémoire 1 les adresses $Ad_o$ à $Ad_o$ + P - 1. Le nombre de microinstructions exécutables par itération est égal à L et la latence relative $L_r$ est égale au plus petit entier supérieur au quotient (L - 1)/P. En plus des drapeaux associés aux champs, chaque microinstruction contient de la façon indiquée à la figure 4, un indicateur de fin de boucle, constitué par exemple par un bit égal à 1 à l'adresse $Ad_o$ + P - 1, et qui possède la valeur 0 par ailleurs. Le dispositif pointeur de programme 2 progresse au rythme d'une horloge de base H non représentée, et s'incrémente d'une unité à chaque coup d'horloge. Le dispositif pointeur du programme 2 est chargé initialement par une valeur d'initialisation figurant l'adresse $Ad_o$.

L'exécution de la boucle de microprogramme est commandée par le dispositif compteur de tickets 3 et le registre à décalage 4 formé des $L_r$-1 registres notés RAD(1) à RAD($L_r$-1).

Le registre accumulateur 10 est initialisé à une valeur N. Tant que le contenu du registre 10 est non nul, la valeur 1 est appliquée à l'entrée du registre à décalage 4. On dit alors que le registre 10 produit un ticket. On appelle ticket (0) la valeur binaire à l'entrée du registre à décalage, et ticket (i) la valeur binaire contenue dans le registre RAD(i). Lorsque la condition de RETOUR est validée, chaque valeur ticket (i) est déplacée dans le registre RAD(i+1) i variant de 0 à $L_r$-2.

La condition RETOUR est validée par un indicateur placé à la fin de la microinstruction placée à l'adresse $AD_o$ + P - 1 et à condition que l'ensemble des valeurs ticket (i) allant de i = 0 à $L_r$ - 2 ne soient pas nulles ce qui correspond à l'information VIDE sur la figure 4.

Après l'initialisation, qui consiste à précharger simultanément les registres 7 et 10 une microinstruction est sélectionnée à chaque cycle de l'horloge H. Si X est la valeur contenue dans le drapeau d'un champ donné, ce champ est invalidé par la sortie de la porte 11, si la valeur ticket (x) correspondante est nulle. Si au contraire la valeur ticket (x) est égale à 1, le champ est validé, et l'instruction qu'il contient est transmise dans le registre de microinstruction 6 pour être exécutée. Ainsi tous les champs d'une microinstruction, après éventuelle invalidation, sont chargés dans le registre de microinstruction 6 à chaque coup de l'horloge H. Le nombre de registres RAD à utiliser dépend de la latence relative maximale admissible. En pratique le nombre de registre RAD peut être limité à trois. Dans ce cas la latence maximale admissible $L_r$ est de 4.

Le dispositif décrit précédemment permet l'exécution de toutes les opérations nécessaires à N itérations.

Chaque itération est attachée à un ticket, issu du registre accumulateur 10 qui se vide sur une durée de $L_r$ périodes, une période étant définie comme l'intervalle de P coups d'horloge pendant lequel les microinstructions de l'adresse $AD_o$ à l'adresse $AD_o$ + P -1 sont successivement lues dans la mémoire 1 adressée par le registre 7. Le ticket devient actif, lorsqu'au début d'une période, il apparaît dans la valeur ticket (0). Au cours de cette période, plus précisément avec un coup d'horloge H de retard par suite du chargement dans le registre microinstruction, tous les champs porteurs d'un drapeau 0 sont exécutés. A la fin de cette période, dont le dernier cycle est caractérisé par la condition RETOUR, le ticket se déplace et apparaît dans la valeur ticket (1), pour une nouvelle période dans laquelle sont exécutés les champs munis du drapeau 1 dans les P microinstructions successives. Ce mécanisme dure $L_r$ périodes, la dernière période, du point de vue de l'itération considérée, étant celle où la valeur ticket ($L_r$ - 1) s'applique sur les champs porteurs du drapeau $L_r$ - 1.

Au cours d'une période donnée, plusieurs itérations sont en cours d'exécution, correspondant chacune aux valeurs ticket (0 à $L_r$ - 1). Le dispositif décrit lance ainsi N itérations en émettant un ticket en ticket (0) à raison d'un nouveau lancement tous les P coups d'horloge H, l'ensemble des itérations étant complètement exécutées. L'exécution de la dernière itération commence avec la (N - 1)ème période, et se termine avec la (N - 1 + $L_r$ -1)ème période, à l'issue de laquelle la valeur ticket ($L_r$ -1) qui était la dernière valeur ticket non nulle encore présente, devient nulle, et pendant laquelle l'indicateur VIDE prend la valeur 1.

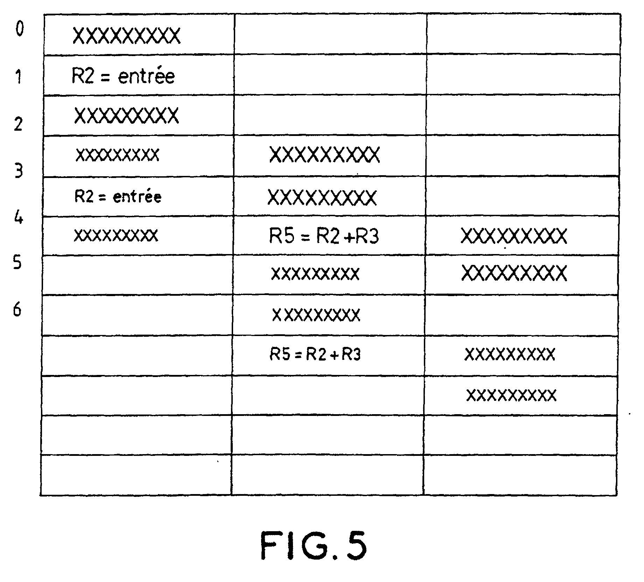

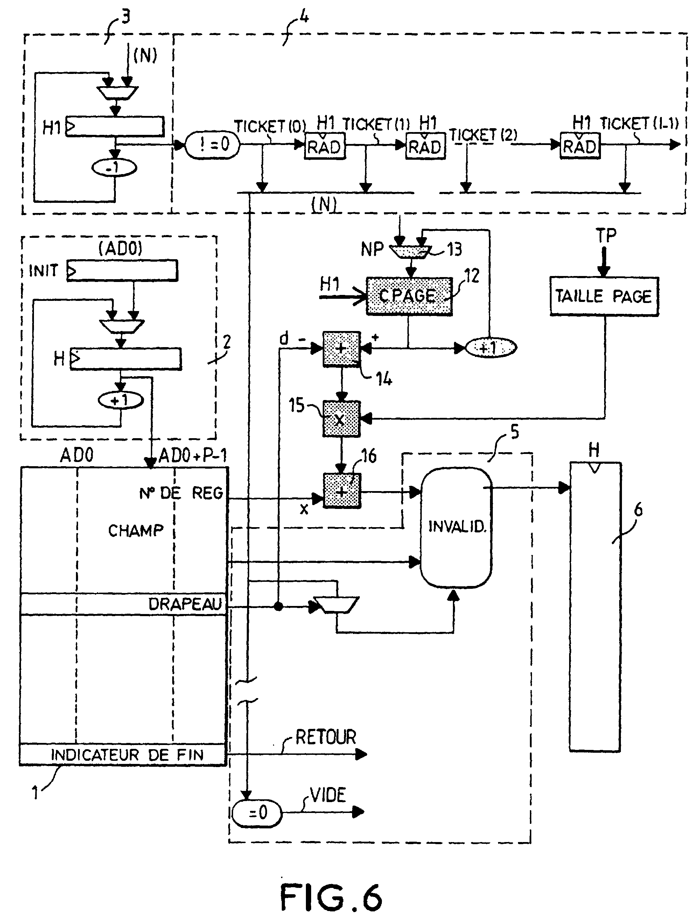

Un autre mode de réalisation de l'invention illustré par le schéma de la figure 6, où les éléments homologues à ceux de la figure 4 sont représentés avec les mêmes références, exploite le fait que les drapeaux adjoints aux champs des microinstructions donnent également une indication du contexte attaché à chaque itération permettant ainsi de séparer les opérations exécutées pour des itérations différentes, même si elles s'exécutent au cours d'un même cycle d'horloge. Cette variante de réalisation de l'invention permet de relâcher la contrainte liée au temps d'occupation des registres lors de la mise en boucle d'un microprogramme d'une itération pour éviter comme le montre l'exemple de la figure 5, une détérioration des contenus de certains registres. Dans cet exemple en effet, on peut voir que la microinstruction n° 1 charge le registre $R_2$ et que la valeur chargée est attendue par la microinstruction n° 5 pour servir d'opérande à l'addition dans un registre $R_5$ des contenus des registres $R_2$ et $R_3$. Du point de vue de l'occupation des ressources, ce microprogramme est compactable avec une période P = 3, l'itération suivante étant représentée en italique. Mais il apparaît dans ces conditions que le contenu du registre $R_2$ va être écrasé par une nouvelle valeur d'entrée au cycle 4, avant que son contenu soit utilisé au cycle 5. Pour résoudre ce problème, différentes techniques telles que celles publiées dans l'articles de M. UGURDAG intitulé « A VLIW Architecture Based on Shifter Register Files » au 26e Symposium annuel en Microarchitecture de December 93, peuvent être utilisées. A défaut, le programmeur est amené à augmenter la période de répétition P, ou à introduire un champ de sauvegarde du registre $R_2$ dans un registre intermédiaire. L'invention propose de résoudre ce problème autrement en partitionnant l'ensemble des registres disponibles en sous-ensembles appelés pages, et en attribuant des pages de registres différentes aux itérations consécutives. Le numéro de registre mentionné explicitement dans la microinstruction n'est plus un numéro absolu, mais un numéro dans une page de registres donné. Dans ces conditions le chargement du registre $R_2$ lors de la 2ème itération de la figure 5 ne peut plus perturber l'opération d'addition qui utilise le registre $R_2$ de la première itération, puisque tous les registres notés $R_2$ sont dans des pages différentes. Dès lors que le nombre de pages est supérieur ou égal à la latence relative $L_r$, le programmeur peut ainsi ignorer la contrainte de temps d'occupation des registres. Ainsi si le nombre total de registres disponibles est NREG, et que TP et NP désignent respectivement la taille et le nombre de pages, le choix de TP et NP est déterminé de façon à respecter les conditions :

_NREG = TP*NP
_ NP > = $L_r$
_ TP < = nombre de registres évoqués dans une itération.

En suivant ce principe, un registre x invoqué lors d'une itération k sera en fait un registre dont le numéro est x + TP * (k modulo NP). Cette dernière quantité désigne alors un numéro absolu du registre, et x le numéro relatif.

Dans la mise en oeuvre de ce procédé représentée à la figure 6 pour simplifier il n'a été représenté que les éléments nécessaires au traitement d'un seul champ de microinstruction comportant un numéro relatif de registre, mais il est bien évident que le mode de réalisation peut s'appliquer également pour plusieurs champs d'une même microinstruction. En plus de la figure 4 le dispositif de la figure 6 comporte un compteur de page 12, chargé à partir d'un circuit multiplexeur 13, et progressant au même rythme d'horloge H1 que le compteur « ticket » 3.

Un circuit additionneur permet de retrancher le numéro de drapeau d au contenu du compteur de page 12. Le résultat C PAGE - d est multiplié par un circuit multiplieur 15 au contenu d'un registre 15 qui est chargé à la valeur de la taille TP de la page. Le résultat TP (C PAGE -d) obtenu est appliqué sur une première entrée d'opérande d'un circuit additionneur 16 pour être additionné au numéro de registre contenu dans la microinstruction. Au début de chaque nouvelle itération k, le compteur de page 12 contient la valeur k modulo NP. Du point de vue de la microinstruction, un champ relatif à l'itération n° k et porteur d'un drapeau de valeur d devient actif durant la période où l'itération n° k + d démarre, c'est-à-dire lorsque le contenu du compteur de page 12 vaut (k + d) modulo NP. Si ce champ mentionne un registre de numéro relatif x, le numéro absolu recherché vaut alors

$$x + TP * ((C \text{ page} - d) \text{ modulo NP})$$

Il est à noter que la mise en oeuvre du dispositif représenté à la figure 6 est très peu coûteuse si TP et NP sont déterminés pour être des puissances de 2.

## Revendications

1.  Procédé de compactage et d'exécution par itérations successives de boucles de microprogrammes comportant un nombre déterminé L de microinstructions longues composées de plusieurs champs répétables selon un nombre déterminé N d'itérations, **caractérisé en ce qu'**il consiste :

    -   à partager le nombre L de microinstructions suivant un nombre $L_r$ de tranches de P microinstructions, où $L_r$ est le plus petit entier strictement supérieur au quotient (L-1)/P,
    -   à adjoindre à chaque champ de microinstructions un champ drapeau identifiant une tranche dans laquelle chaque microinstruction se trouve,
    -   à superposer dans une mémoire de programme (1) $L_r$ tranches obtenues pour obtenir un microprogramme compacté de P microinstructions seulement,
    -   à identifier (1, 2, 4) toutes les P microinstructions les tranches successives,

    et à exécuter (4, 5) pendant les N itérations les champs des microinstructions dont le numéro de drapeau correspond à une tranche active.

2.  Procédé selon la revendication 1, **caractérisé en ce qu'**il consiste à distribuer (12,..16) les champs des microinstructions de chacune des itérations respectivement dans des pages de registres en attribuant un numéro de page de registre à chaque itération.

3. Procédé selon la revendication 2, **caractérisé en ce qu'**il consiste à déterminer le nombre de page pour qu'il soit supérieur ou égal au nombre de tranches L, et à déterminer le nombre de registres NREG nécessaires à l'exécution des microinstructions en effectuant le produit (15) de la taille (TP) par le nombre de pages (NP), la taille (TP) étant déterminée par le nombre de registres évoqués dans une itération.

4. Dispositif pour la mise en oeuvre du procédé selon l'une quelconque des revendications 1 et 2, **caractérisé en ce qu'**il comprend une mémoire de programme (1) pour l'enregistrement des microinstructions, un dispositif pointeur de programme (2) pour l'adressage des microinstructions dans la mémoire de programme (1), un compteur d'itération (10) couplé à un registre à décalage (4) pour adresser successivement les champs des microinstructions en fonction des numéros de drapeaux associés, un dispositif de lecture (5) des champs de microinstruction enregistré dans la mémoire de programme (1) couplé à un registre de microinstruction (6) pour le transfert des champs des microinstructions lus dans la mémoire de programme (1) dans un registre de microinstruction (6) à chaque itération.

it consists in distributing (12, ... 16) the fields of the Microinstructions of each of the iterations respectively into pages of registers by allocating a register page number to each iteration.

3. Method according to Claim 2, **characterized in that** it consists in determining the number of pages in such a way that it is greater than or equal to the number of blocks $L_r$ and in determining the number of registers NREG necessary for executing the Microinstructions by computing the product (15) of the size (TP) times the number of pages (NP), the size (TP) being determined by the number of registers invoked in an iteration.

4. Device for implementing the method according to either one of Claims 1 and 2, **characterized in that** it comprises a program memory (1) for recording the Microinstructions, a program pointer device (2) for addressing the Microinstructions in the program memory (1), an iteration counter (10) coupled to a shift register (4) so as to successively address the fields of the Microinstructions as a function of the associated flag numbers, a device (5) for reading the Microinstruction fields recorded in the program memory (1) coupled to a Microinstruction register (6) for transferring the Microinstruction fields read from the program memory (1) into a Microinstruction register (6) at each iteration.

## Claims

1. Method of compacting and executing by successive iterations microprogram loops comprising a determined number L of long Microinstructions composed of several repeatable fields according to a determined number N of iterations, **characterized in that** it consists:

   - in apportioning the number L of Microinstructions according to a number $L_r$ of batches of P Microinstructions, where $L_r$ is the smallest integer strictly greater than the quotient (L-1)/P,
   - in supplementing each field of Microinstructions with a flag field identifying a batch within which each Microinstruction is located,
   - in overlaying in a program memory (1) $L_r$ blocks obtained so as to obtain a compacted microprogramme of P Microinstructions only,
   - in identifying (1, 2, 4) the successive blocks every P Microinstructions,

   and in executing (4, 5) during the N iterations the fields of the Microinstructions whose flag number corresponds to an active block.

2. Method according to Claim 1, **characterized in that**

## Patentansprüche

1. Verfahren zur Verdichtung und Ausführung von aufeinanderfolgenden Iterationen in Mikroprogrammschleifen mit einer bestimmten Anzahl L von langen Mikrobefehlen, die von mehreren gemäß einer bestimmten Anzahl N von Iterationen wiederholbaren Feldern gebildet werden, **dadurch gekennzeichnet, daß** es darin besteht,

   - die Anzahl L von Mikrobefehlen in eine Anzahl $L_r$ von Abschnitten aus P Mikrobefehlen zu unterteilen, wobei $L_r$ die kleinste ganze Zahl ist, die eindeutig größer als der Quotient (L-1)/P ist,
   - jedem Feld von Mikrobefehlen ein Flaggenfeld hinzuzufügen, das einen Abschnitt identifiziert, in dem sich jeder Mikrobefehl befindet,
   - in einem Programmspeicher (1) $L_r$ Abschnitte übereinanderzulegen, die erhalten wurden, um ein verdichtetes Mikroprogramm von nur P Mikrobefehlen zu erhalten,
   - alle P Mikrobefehle der aufeinanderfolgenden Abschnitte zu identifizieren (1, 2, 4),
   - und während der N Iterationen die Felder der Mikrobefehle auszuführen (4, 5), deren Flagennummer einem aktiven Abschnitt entspricht.

**2.** Verfahren nach Anspruch 1, **dadurch gekennzeichnet, daß** es darin besteht, die Felder der Mikrobefehle jeder der Iterationen auf Registerseiten zu verteilen (12, ..., 16), indem jeder Iteration eine Registerseitennummer zugewiesen wird.

**3.** Verfahren nach Anspruch 2, **dadurch gekennzeichnet, daß** es darin besteht, die Anzahl von Seiten so zu bestimmen, daß diese Anzahl größer/gleich der Anzahl von Abschnitten $L_r$ ist, und die Anzahl von Registern NREG zu bestimmen, die für die Ausführung der Mikrobefehle erforderlich sind, indem das Produkt (15) aus der Größe (TP) mit der Anzahl (NP) von Seiten gebildet wird, wobei die Größe (TP) durch die Anzahl von in einer Iteration aufgerufenen Registern bestimmt wird.

**4.** Vorrichtung zur Durchführung des Verfahrens nach einem beliebigen der Ansprüche 1 und 2, **dadurch gekennzeichnet, daß** sie einen Programmspeicher (1) zur Speicherung der Mikrobefehle, eine Vorrichtung (2) zur Programm-Markierung, um die Mikrobefehle im Programmspeicher (1) zu adressieren, einen Iterationszähler (10), der an ein Schieberegister (4) angeschlossen ist, um nacheinander die Mikrobefehlsfelder abhängig von den zugeordneten Flaggennummern zu adressieren, eine Lesevorrichtung (5) für die in dem Programmspeicher (1) gespeicherten Mikrobefehlsfelder und ein Mikrobefehlsregister (6) enthält, das bei jeder Iteration für den Transfer der Felder der Mikrobefehle, die aus dem Programmspeicher (1) gelesen wurden, mit dem Mikrobefehlsregister (6) gekoppelt ist.

CHAMPS DE LA MICROINSTRUCTION

| | | | | |
|---|---|---|---|---|
| A0 | B0 | | | |
| A1 | B1 | C1 | | |
| A2 | B2 | C2 | | |
| | | | D3 | |
| | | | D4 | |
| | | | D5 | |
| | | | D6 | E6 |
| | | | | E7 |
| | | | | |
| | | | | E9 |

L CYCLES

# FIG.1a

8

FIG.1b

| | | | | | Section |
|---|---|---|---|---|---|---|
| 0 | A0 | B0 | | | | |
| 1 | A1 | B1 | C1 | | | |
| 2 | A2 | B2 | C2 | | | ENTRÉE |
| 3 | | | | D3 | | |
| 4 | A0 | B0 | | D4 | | |
| 5 | A1 | B1 | C1 | D5 | | |
| 6 | A2 | B2 | C2 | D6 | E6 | |
| 7 | | | | D3 | E7 | CORPS |
| 8 | A0 | B0 | | D4 | | |
| 9 | A1 | B1 | C1 | D5 | E9 | |
| 10 | A2 | B2 | C2 | D6 | E6 | |
| 11 | | | | D3 | E7 | |
| 12 | | | | D4 | | |
| 13 | | | | D5 | E9 | SORTIE |
| 14 | | | | D6 | E6 | |
| 15 | | | | | E7 | |
| 16 | | | | | | |
| 17 | | | | | E9 | |

# FIG. 2

| | PA | | PB | | PC | | PD | | PE | |
|---|---|---|---|---|---|---|---|---|---|---|
| 0 | A0 | 0 | B0 | 0 | | | | | | |
| 1 | A1 | 0 | B1 | 0 | C1 | 0 | | | | |
| 2 | A2 | 0 | B2 | 0 | C2 | 0 | | | | |
| 3 | | | | | | | D3 | 0 | | |
| 4 | | | | | | | D4 | 1 | | |
| 5 | | | | | | | D5 | 1 | | |
| 6 | | | | | | | D6 | 1 | E6 | 1 |
| 7 | | | | | | | | | E7 | 1 |
| 8 | | | | | | | | | | |
| 9 | | | | | | | | | E9 | 2 |
| | | | | | | | | | | |

## FIG.3a

| A0 | 0 | B0 | 0 | | | D4 | 1 | | |
|---|---|---|---|---|---|---|---|---|---|
| A1 | 0 | B1 | 0 | C1 | 0 | D5 | 1 | E9 | 2 |
| A2 | 0 | B2 | 0 | C2 | 0 | D6 | 1 | E6 | 1 |
| | | | | | | D3 | 0 | E7 | 1 |

## FIG.3b

FIG.4

| XXXXXXXX | | |
|---|---|---|
| R2 = entrée | | |
| XXXXXXXX | | |
| XXXXXXXX | XXXXXXXX | |
| R2 = entrée | XXXXXXXX | |
| XXXXXXXX | R5 = R2 +R3 | XXXXXXXX |
| | XXXXXXXX | XXXXXXXX |
| | X XXXXXXXX | |
| | R5 = R2 +R3 | XXXXXXXX |
| | | XXXXXXXX |
| | | |
| | | |

## FIG.5

FIG.6